# EUROPEAN PATENT SPECIFICATION

(11) **EP 1 992 201 B1**
(45) Date of publication and mention of the grant of the patent: **18.05.2016**
(21) Application number: 07705904.6
(22) Date of filing: 16.02.2007
(51) Int. Cl.: H05B 33/08, H05B 37/02

(54) **INTERACTION MECHANISM FOR LIGHT SYSTEMS**
INTERAKTIONSMECHANISMUS FÜR LICHTSYSTEME
MECANISME D'INTERACTION POUR SYSTEMES D'ECLAIRAGE

(30) Priority: 28.02.2006 EP 06110483
(43) Date of publication of application: 19.11.2008
(73) Proprietor: Koninklijke Philips N.V., 5656 AE Eindhoven (NL)
(72) Inventor: DIEDERIKS, Elmo Marcus Attila, NL-5656 AA Eindhoven (NL)
(74) Representative: Verweij, Petronella Daniëlle
(86) International application number: PCT/IB2007/050512
(87) International publication number: WO 2007/099470

(56) References cited:
- EP-A- 1 113 709
- WO-A1-03/015067
- FR-A- 2 678 711
- US-A1- 2004 161 132

## Description

The present invention relates to systems and methods for interacting with light system(s) and controlling at least one light source, and more particularly to setting attributes of light from the light source(s).

Lights systems are becoming more advanced, complex and integrated to provide flexibility in selecting desired lighting. The increasing complexity poses difficulties in the interaction with these light systems. For example, it is desirable for a user to easily set various light attributes, such as the intensity as well as the color, hue and saturation of a light source(s), or even light attributes of only a specific area of illumination. It is clear that appropriate and easy to use interaction solutions are required.

FR 2 678 711 A discloses an ambient lighting unit with controllable brightness and color for domestic use. The ambient lighting device includes a set of three fluorescent lamp (red, green and blue), three controllable oscillators to power the three lamps at high frequency, a control circuit, and a supply. The composite beam of emitted light is adjustable in intensity and color through buttons operated by the user. Pressing the buttons commands an AutoScroll for visualization of several intensities and/or colors of light. The user selects and stores a desirable intensity and/or color by releasing the buttons.

US 2004/0161132 A1 discloses a gesture recognition interface for use in controlling self-service machines and other devices. The method involves storing information relating to number of gestures. The imaging of a gesture-making target is performed. The stored information and the imaging result of the gesture-making target are compared to determine a gesture initiated control operation.

WO 03/015067 A1 discloses a lighting apparatus includes several LEDs and an integral power supply/controller unit in a unitary housing and coupled only to the LEDs and a power source. The power supply/controller includes a power supply module, a memory device and a user interface with pre-set buttons. A controller receives a signal from each of the pre-set buttons and communicates with the memory device and the power supply module to instantly cause the LEDs to produce illumination color corresponding to the signal.

EP 1 113 709 A discloses a LED lighting equipment which can perform lighting control of the light by an LED aggregate lamp portion and can obtain wide variety of tones in wide range by easy operation. A light control type LED lighting equipment comprises control input generating means for generating one series of control input signal, control output generating means and individual power control means. A color tone of said LED aggregate lamp portion is varied continuously depending on the value of said control input signal.

State of the art solutions usually offer different control units for the different light variables like hue, saturation and intensity. These solutions lack appropriate feed forward, such as how will the light look like when the user performs certain control actions or selects degrees or variables of light attributes. More importantly, the variables used to select or change light attributes do not conform to the mental model users have of light. For example, users do no think in terms of separate levels of saturation and intensity, such as 60% saturated blue light having a certain level of intensity e.g., 80% intensity. Accordingly, there is a need for an improved system and method for selecting desired light attributes easily and intuitively.

One object of the present systems and methods is to overcome the disadvantages of the prior art.

This and other objects are achieved by systems and methods that include feed forward mechanism, where at least one controllable light source is configured to provide a light; and a processor is configured to switch between an interaction mode and an illumination mode in response to a user input from a user, for example. In the interaction mode, the processor controls the light source(s) to provide previews of light with varying attributes for selection by the user of one preview, or a combination of previews for illuminating one or more areas. In the illumination mode, the processor controls the light source(s) to provide light having the attributes associated with the preview(s) selected by the user.

The user input may include a gesture, where the system further includes a vision system configured to recognize the gesture for switching between the interaction and illumination modes, and/or for selecting the desired preview, for example. Alternatively or in addition to, a pointing device or a button(s) may be used for providing the user input. For example, particularly when many light sources are provided, the user input is provided by pointing a pointing device to the light sources or to a display where the light sources or light sections associated with the light sources are spatially mapped to or displayed thereon.

Of course, various light sections with different light attributes from only one light source may also be displayed on the display, for selection of the desired light section having the desired light attributes, either spatially (where more than one section is displayed, each section having a constant light attributes) or temporally (where at least one section is displayed, each section having a light attributes varying in time). For example, one light section from one light source may be displayed on a display or the light source itself may be controlled to provide previews varying in time.

At least one of the previews, which may be either directly provided by the light source(s) or displayed on the display, is selected by the user to provide light (by the light sources) having the desired/selected light attribute by pointing to the desired preview, for example. Of course, a further preview may also be provided formed from a combination of at least two previews selected by the user to provide light having combined attributes of individual light attributes of each selected preview.

Further areas of applicability of the present systems and methods will become apparent from the detailed description provided hereinafter. It should be understood that the detailed description and specific examples, while indicating exemplary embodiments of the systems and methods, are intended for purposes of illustration only and are not intended to limit the scope of the invention.

These and other features, aspects, and advantages of the apparatus and methods of the present invention will become better understood from the following description, appended claims, and accompanying drawing where:
Fig. 1 shows a row of previews with combined saturation and intensity of light according to one embodiment;
Fig. 2 shows a matrix of previews with combined saturation, intensity and color of light according to another embodiment;
Fig. 3 shows modes of the lighting system according to further embodiment;
Fig. 4 shows a matrix of light sections having a section for previews according to further embodiment; and
Fig. 5 shows a lighting system according to another embodiment.

The following description of certain exemplary embodiment(s) is merely exemplary in nature and is in no way intended to limit the invention, its application, or uses. In the following detailed description of embodiments of the present system, reference is made to the accompanying drawings which form a part hereof, and in which are shown by way of illustration specific embodiments in which the system may be practiced. These embodiments are described in sufficient detail to enable those skilled in the art to practice the presently disclosed system and it is to be understood that other embodiments may be utilized and that structural and logical changes may be made within the scope of the claimed invention. The following detailed description is therefore not to be taken in a limiting sense, and the scope of the present system is defined only by the appended claims. The leading digit(s) of the reference numbers in the figures herein typically correspond to the figure number, with the exception that identical components which appear in multiple figures are identified by the same reference numbers. Moreover, for the purpose of clarity, detailed descriptions of well-known devices, circuits, and methods are omitted so as not to obscure the description of the present system.

The lighting systems and methods offer a feed forward interaction solution that provides a number of previews that the user can point at to indicate which light setting is desired. After the user indicates a desire to change the light, the light system provides a number of previews of light with different attributes, for instance light in different intensities, hue, color, saturation, or combinations thereof. The previews may be either directly provided from at least one light source or provided as images of light sections mapped on a screen. The mapping may correspond to the location of the light sources or location of areas illuminated by the light sources, for example.

In response, to the user selecting a preview, such as by pointing at the desired preview, the attributes of lights emanating from the light source(s) of the lighting system change to light attributes of the selected preview(s). Illustratively, the pointing action is recognized by the system and the whole light system adapts the light emanating from the light source(s) as presented in the selected preview.

The user may indicate a desire to change the light setting by pressing a hard button situated on the light system. Alternatively the user may make a gesture including pointing in a predetermined direction or making any other gesture, e.g., in a certain area, such as in front of a camera, that is recognized by the system using the camera and computer vision, for example, similar to those described in U.S. 2004/0161132A1, which is incorporated herein by reference in its entirety. In response to such user action, such as through a user gesture, activating a button, which may be a hardware or software button displayed on a display of the lighting system, or pointing to a particular area or direction, the system changes from a normal mode, such as an illumination mode, to an interaction mode where light previews are provided to the user.

In case of a light system that comprises multiple light sources, for instance, light emitting diodes (LEDs) or any controllable light source, arranged in an array or other arrangement to illuminate a large area, the light system may provide the previews spatially, for instance in a row. The user may now select the light setting by pointing at the preferred light setting or preview. This action may be recognized for instance using the camera and computer vision hardware and software accessories.

As an alternative to the spatial presentation of previews, the light system may show the previews in time, for example, by slowly changing light attributes of light either emanating directly from at least one light source or displayed on a display, such as increasing the intensity or changing the color for example.

Next, the user may select a preview by making another gesture, (e.g., point to a particular preview(s) using a pointer which may simply be the user's hand or finger, or may be a laser pointer or a mere pointer used to point and select on a touch screen one of more previews spatially or temporally displayed thereon,) to indicate to the light system the desired preview having the desired setting from the previews presented temporally or spatially. Instead of pointing, the system may be configured to recognize any predefined or learned gesture as indicating the selection of a preview or combination of previews, for instance, using the camera and computer vision.

In the case of selecting a combination of previews, a further preview may also be presented having light attributes formed from the combination of light attributes of the selected previews. The system may be configured to recognize the selection of combined previews, such as by having a 'combine preview' mode. Illustratively, the pointer or any component of the system may have a button to select the 'combine preview' mode where a selected preview is combined with other preview(s). In the case where preview sections are displayed spatially on a display, the preview sections may be combined using drag and drop by a pointer or cursor controlled by a mouse for example.

Thus, dragging one preview sections over another forms a new preview section having combined light attributes of the individual preview sections.

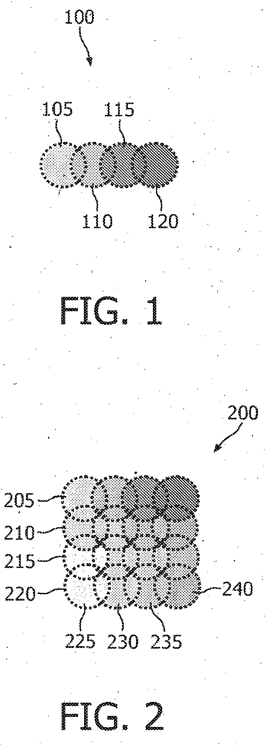

The light previews can cover intensity, color, hue and saturation or a combination of these in a way that fits the mental model of the user. For instance, saturation and intensity may be combined in one dimension, and presented in a row of previews 100 as shown in Fig. 1. As shown in Fig. 1, the row of previews 100 include illuminated sections 105, 110, 115, 120 having different light attributes, namely, combined saturation and intensity of light.

For example, all four sections 105, 110, 115, 120 are blue of differing saturations and intensities, from low saturation and intensity at section 105, such as low intensity pale blue, to increasing saturations and intensities towards section 120, such as high intensity bright blue. It should be noted that the overlapping areas between the sections include even a different combination of saturations and intensities, namely, the combination of the saturations and intensities from each of the sections forming the overlapping area. Thus, the overlapping areas provide even more choices for the user to select a desired combination of saturation and intensity for the light to be emitted from the light source(s).

Instead of one dimensional previews, the light system can furthermore offer previews in multiple dimensions. For instance, as shown in Fig. 2, the system may offer previews in two dimensions, such as color and saturation/intensity in a matrix of previews. In the illustrative embodiment shown in Fig. 2, saturation and intensity are combined in one dimension, e.g., horizontally increasing from left to right similar to that shown in Fig. 1, and color is represented in another dimension, e.g., vertically changing, thus offering a matrix of previews 200. For example, the color of the first or top row 205 of the preview matrix 200 may be blue increasing in saturation and intensity from left to right as in Fig. 1, the second row 210 may be green, the third row 215 may be yellow and the fourth or bottom row 220 may be red, e.g., beginning a pale pink section 220 and ending with a bright red section 240, with intermediate sections 230, 235 of differing saturations and intensities, and also including further differing saturations and intensities in the overlapping areas of two adjacent sections.

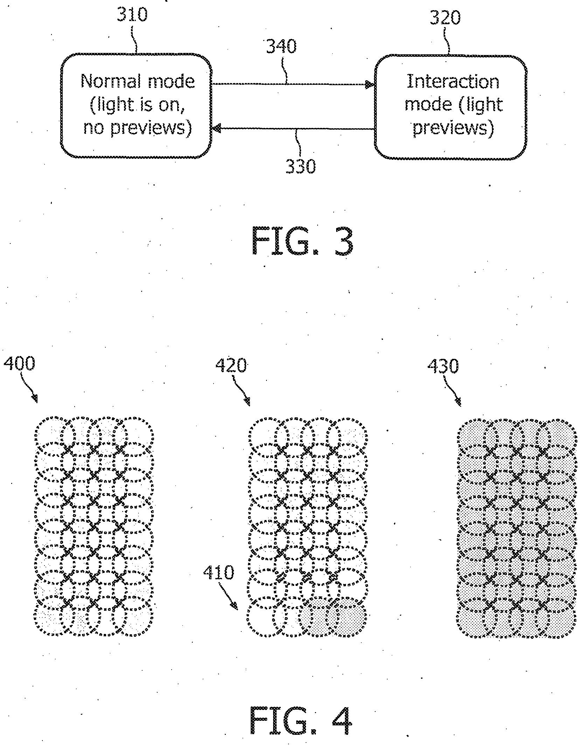

In one illustrative embodiment, once the user indicates which preset or preview section or area he would like to have, the system changes back to the normal or illumination mode where the light source(s) are controlled to provide light having attributes of the selected preset or preview section. Alternatively, as shown in Fig. 3, the system may change back to the normal or illumination mode 310, after a certain period of time in which the system does not detect user input in the interaction mode 320, as shown by arrow 330, where the light attributes from the light source(s) are not changed. Of course if desired, the system may be configured to change the light attributed to a default or predetermined programmable attributes upon detection of no user input for a predetermined time, which itself may be programmable to be any desired length of time, typically of the order of tens of seconds or a minute or so. As describe, the interaction mode 320 may be entered upon a user indication of intention to change the light attributes of light emanating from the light source(s), as shown by arrow 340.

A further embodiment is shown in Fig. 4, where the light system comprises a matrix of light sources 400, such as a matrix of LEDs, to illuminate a large area. Illustratively, each circle indicates an area that is illuminated by a single LED in the illumination matrix 400, which may also be mapped and shown on a display associated with the lighting system. In the case where a camera is used to detect user gestures, if the user makes a gesture in the camera viewing area, such as the area that is illuminated by the LED matrix 400 that are also used for providing the feed forward in the interaction mode, (e.g., a portion of the illumination area associated with the LED matrix 400,) the system changes to the interaction mode and light previews are shown to the user, where the entire LED matrix 400 shows previews where one or more LEDs show a different preview spatially. Of course, temporal presentations or a combination of temporal and spatial presentations of the previews by one or more LEDs may also be provided as desired or programmable.

Alternatively, instead of the entire LED matrix 400, a portion 410 of the LED matrix 400 may be used for the interaction mode, as programmable by the user for example, to provide light previews, while the rest of the LED matrix 400 remains in the normal illumination mode. Once the user has selected a preview, e.g., preview 420, then the entire light system adapts the selected preview or preset 420, and the system changes from the interaction mode to the normal or illumination mode, where all the LEDs 430 (or any desired portion of the LEDs as programmable by the user for example) provide light having attributes of the selected preset or preview 420.

In the case where the LED matrix 400 is mapped and shown on a display, upon user selection of a preview from the displayed previews or combinations thereof, and prior to the actual light sources being controlled to provide lights having attributes of the selected preview, the entire matrix 400 displayed on a display may first be changed to display 430 the selected preview 420, and then the light sources may be controlled to provide light having attributes of the selected preview after user approval or action, or after a predetermined time passes with no user input.

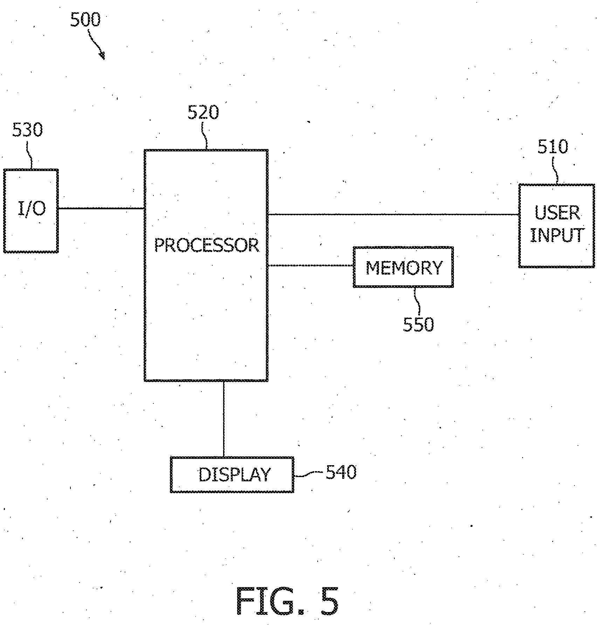

FIG. 5 shows a lighting system 500 in accordance with an embodiment of the present system. The system 500 has at least one controllable light source 510 to provide light of selectable or variable attributes. As described, a plurality of light sources may be used, arranged in a matrix 400 shown in Fig. 4 for example. The light source(s) may be any kind of light source that can provide lights of various attributes, such as various intensity levels, different colors, hue, saturation and the like, such as incandescent, fluorescent, halogen, or high intensity discharge (HID) light, which may have a ballast for control of the various light attributes. Light emitting diodes (LEDs) are particularly well suited light sources as they easily can be configured to provide light with changing colors, intensity, hue, saturation and other attributes, and typically have electronic circuitry for control of the various light attributes.

The system 500 further includes a processor 520 configured to switch between the illumination and interaction modes, including the combine preview mode, in response to a user input from a user through an input/output (I/O) device 530. Any suitable user I/O device 530 may be used, such as a keyboard or a device having a keyboard, a mouse controlling a cursor displayed on a screen or display 540, which may be a stand alone display connectable or operationally coupled to the processor 520. The various component of the system may be operationally coupled to each other by any type of link, including wired or wireless link(s), for example. The display 540 may also be part of another device or part of the processor 520. Illustratively, the processor 520 and/or the display 540 may be part of a mobile device, such as a remote controller, a personal digital assistant (PDA), mobile phone, and/or laptop or personal computer

As described, the I/O device 530 may include one or more buttons or keys for selection or entry of the interaction mode, and/or other modes. Of course, the button(s) may be soft buttons, such as displayed on the screen or display 540 and selected via a cursor controlled by a mouse, for example, such as similar to the display and selection of the previews in the interaction mode. Alternatively or in addition, the display may be touch sensitive, where soft buttons or the displayed previews may be selected using a pointer. Of course, any type of display may be used, such as a liquid crystal display (LCD) or a cathode ray tube (CRT). Further, the display may be part of a different system, such as a multimedia system or a television set. Clearly only a single display is suitable for operation which may be stand alone or part of the I/O device 530 for example, although many displays may also be utilized. Of course, a display is not even needed in the case where the light source(s) itself provides the previews directly.

The I/O device 530 may also include a camera with associated computer vision software resident in a memory 550 operationally coupled to the processor 520, configured to recognize gestures of the user for controlling the system 500, such as switching between the illumination and interaction modes and/or selecting the previews using gestures including pointing to the desired previews, whether displayed on a screen or provided by the matrix of light sources, or temporally provided by one or more light source, as described above.

The memory 550 may be any type of device for storing application data as well as other data, such as presets of desired light attributes. The application data and other signals or data are received by the processor 520 for configuring the processor 520 to perform operation acts in accordance with the present systems and methods. The operation acts include switching between the illumination and interaction modes, controlling the light source(s) 510 and/or the display 540 for providing or displaying the previews, and upon user selection, controlling the light source(s) 510 to provide light having attributes associated with the selected preview. Various programmable user interfaces may also be displayed on the display 540.

The operation acts of the present methods are particularly suited to be carried out by a computer software program, such computer software program preferably containing modules corresponding to the individual steps or acts of the methods. Such software can of course be embodied in a computer-readable medium, such as an integrated chip, a peripheral device or memory, such as the memory 550 or other memory coupled to the processor 520.

The computer-readable medium and/or memory 550 may be any recordable medium (e.g., RAM, ROM, removable memory, CD-ROM, hard drives, DVD, floppy disks or memory cards) or may be a transmission medium (e.g., a network comprising fiber-optics, the world-wide web, cables, and/or a wireless channel using, for example, time-division multiple access, code-division multiple access, or other wireless communication systems). Any medium known or developed that can store information suitable for use with a computer system may be used as the computer-readable medium and/or memory 550.

Additional memories may also be used. The computer-readable medium, the memory 550, and/or any other memories may be long-term, short-term, or a combination of long- and-short term memories. These memories configure the processor 520 to implement the methods, operational acts, and functions disclosed herein. The memories may be distributed or local and the processor 520, where additional processors may be provided, may be distributed or singular. The memories may be implemented as electrical, magnetic or optical memory, or any combination of these or other types of storage devices. Moreover, the term "memory" should be construed broadly enough to encompass any information able to be read from or written to an address in the addressable space accessed by a processor. With this definition, information on a network is still within memory 550, for instance, because the processor 520 may retrieve the information from the network.

The processor 520 and memory 550 may be any type of processor/ controller and memory, such as those described in U.S. 2003/0057887, which is incorporated herein by reference in its entirety. The processor 520 is capable of providing control signals and/or performing operations in response to input signals from the I/O device 530 and/or the light source(s) 510, and executing instructions stored in the memory 550. The processor 520 may be an application-specific or general-use integrated circuit(s). Further, the processor 520 may be a dedicated processor for performing in accordance with the present system or may be a general-purpose processor wherein only one of many functions operates for performing in accordance with the present system. The processor may operate utilizing a program portion, multiple program segments, or may be a hardware device utilizing a dedicated or multi-purpose integrated circuit. Each of the above systems utilized for identifying the presence and identity of the user may be utilized in conjunction with further systems.

Of course, it is to be appreciated that any one of the above embodiments or processes may be combined with one or with one or more other embodiments or processes to provide even further improvements in finding and matching users with particular personalities, and providing relevant recommendations.

Finally, the above-discussion is intended to be merely illustrative of the present system and should not be construed as limiting the appended claims to any particular embodiment or group of embodiments. Thus, while the present system has been described in particular detail with reference to specific exemplary embodiments thereof, it should also be appreciated that numerous modifications and alternative embodiments may be devised by those having ordinary skill in the art within the scope of the claims that follow. The specification and drawings are accordingly to be regarded in an illustrative manner and are not intended to limit the scope of the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise; and
h) no specific sequence of acts or steps is intended to be required unless specifically indicated.

## Claims

1. A system (500) comprising:
- a plurality of controllable light sources (400) configured to provide light in an illumination mode (310) to illuminate areas; and
- a processor (520) configured to switch between an interaction mode (320) and the illumination mode (310) in response to a user input from a user;
wherein, in said interaction mode (320), said processor (520) is adapted to control said plurality of controllable light sources (400) to provide previews of said light with at least one varying attribute for selection of one preview of said previews by said user; and
wherein, in said illumination mode (310), said processor (520) is configured to control said at least one controllable light source (400) to provide said light having attributes of said one preview,
**characterized in that**
- in said interaction mode (320), said processor (520) is configured to provide said previews with a portion (410) of said plurality of controllable light sources (400) while a rest of the plurality of controllable light sources (400) remains in the illumination mode.

2. The system (500) of claim 1, wherein said user input includes a gesture, said system further comprising a vision system (530) configured to recognize said gesture for at least on one of switching between said interaction mode (320) and said illumination mode (310), and selecting said one preview (420).

3. The system (500) of claim 1, further comprising at least one of a pointing device and a button for providing said user input.

4. The system (500) of claim 1, wherein said user input is provided by pointing a pointing device (530) to said at least one of said at least one controllable light source (510) or a display (540) of at least one light section associated with said at least one controllable light source (510).

5. The system (500) of claim 4, wherein said display (540) is included in one of a multimedia device, a computer, a monitor, a television, a personal digital assistant, a telephone, and a remote control unit.

6. The system (500) of claim 1, wherein said varying attributes are varied over time.

7. The system (500) of claim 1, wherein said at least one controllable light source (510) temporally provides said previews with said at least one varying attribute in said interaction mode (320).

8. The system (500) of claim 1, wherein a plurality of light sources (400) spatially provides said previews with said at least one varying attribute in said interaction mode (320).

9. The system (500) of claim 1, wherein a plurality of light sources (400) spatially provides said previews with at least two varying attributes.

10. The system (500) of claim 1, wherein said at least one varying attribute includes at least one of intensity, saturation, color and hue.

11. A method for selecting attributes of a light from a plurality of controllable light sources (400), the method comprising the acts of:
- providing light from the plurality of controllable light sources (400) in an illumination mode (310) to illuminate areas;
- switching between the illumination mode (310) and an interaction mode (320) in response to a user input;
- controlling, in said interaction mode (320), said plurality of said controllable light sources (400) to provide'previews of said light with variable attributes;
- selecting one preview of said previews; and
- controlling said plurality of controllable light sources (400) to provide said light having attributes of said one preview,
**characterized in that**
controlling, in said interaction mode (320), said plurality of said controllable light sources (400) to provide previews of said light with variable attributes comprises controlling a portion (410) of said plurality of said controllable light sources (400) to provide said previews of said light with variable attributes while a rest of said plurality of controllable light sources (400) remains in the illumination mode.

## Patentansprüche

1. System (500), umfassend:
- eine Mehrzahl von steuerbaren Lichtquellen (400), die so eingerichtet sind, dass sie Licht in einem Beleuchtungsmodus (310) zur Beleuchtung von Bereichen bereitstellen; sowie
- einen Prozessor (520), der so eingerichtet ist, dass er in Reaktion auf eine Benutzereingabe von einem Benutzer zwischen einem Interaktionsmodus (320) und dem Beleuchtungsmodus (310) schaltet;
wobei in dem Interaktionsmodus (320) der Prozessor (520) so eingerichtet ist, dass er die Mehrzahl von steuerbaren Lichtquellen (400) so steuert, dass Vorschauen des Lichts mit mindestens einer variierenden Eigenschaft zur Wahl einer Vorschau der Vorschauen durch den Benutzer vorgesehen werden; und
wobei in dem Beleuchtungsmodus (310) der Prozessor (520) so eingerichtet ist, dass er die mindestens eine steuerbare Lichtquelle (400) so steuert, dass das Licht mit Eigenschaften der besagten einen Vorschau bereitgestellt wird,
**dadurch gekennzeichnet, dass**
in dem Interaktionsmodus (320) der Prozessor (520) so eingerichtet ist, dass er die Vorschauen mit einem Teil (410) der Mehrzahl von steuerbaren Lichtquellen (400) vorsieht, während ein Rest der Mehrzahl von steuerbaren Lichtquellen (400) in dem Beleuchtungsmodus verbleibt.

2. System (500) nach Anspruch 1, wobei die Benutzereingabe eine Gestik enthält, wobei das System weiterhin ein Visionssystem (530) umfasst, das so eingerichtet ist, dass es die Gestik für zumindest die Umschaltung zwischen dem Interaktionsmodus (320) und dem Beleuchtungsmodus (310) oder das Auswählen der besagten einen Vorschau (420) erkennt.

3. System (500) nach Anspruch 1, das weiterhin zumindest ein Zeigegerät oder eine Taste zum Bereitstellen der Benutzereingabe umfasst.

4. System (500) nach Anspruch 1, wobei die Benutzereingabe vorgesehen wird, indem ein Zeigegerät (530) auf die mindestens eine der mindestens einen steuerbaren Lichtquelle (510) oder ein Display (540) von mindestens einem, der mindestens einen steuerbaren Lichtquelle (510) zugeordneten Lichtschnitt zeigt.

5. System (500) nach Anspruch 4, wobei das Display (540) in einem(einer) der folgenden enthalten ist: einem Multimedia Device, einem Computer, einem Monitor, einem Fernsehapparat, einem Personal Digital Assistant, einem Telefon sowie einer Fernbedienungseinheit.

6. System (500) nach Anspruch 1, wobei die variierenden Eigenschaften im Laufe der Zeit variiert werden.

7. System (500) nach Anspruch 1, wobei die mindestens eine steuerbare Lichtquelle (510) die Vorschauen in dem Interaktionsmodus (320) zeitweilig mit der mindestens einen variierenden Eigenschaft versieht.

8. System (500) nach Anspruch 1, wobei eine Mehrzahl von Lichtquellen (400) die Vorschauen in dem Interaktionsmodus (320) räumlich mit der mindestens einen variierenden Eigenschaft versieht.

9. System (500) nach Anspruch 1, wobei eine Mehrzahl von Lichtquellen (400) die Vorschauen räumlich mit mindestens zwei variierenden Eigenschaften versieht.

10. System (500) nach Anspruch 1, wobei die mindestens eine variierende Eigenschaft mindestens eine(einen) der folgenden beinhaltet: Intensität, Sättigung, Farbe und Farbton.

11. Verfahren zum Auswählen von Eigenschaften eines Lichts aus einer Mehrzahl von steuerbaren Lichtquellen (400), wobei das Verfahren die folgenden Schritte umfasst, wonach:
- Licht aus der Mehrzahl von steuerbaren Lichtquellen (400) in einem Beleuchtungsmodus (310) zur Beleuchtung von Bereichen bereitgestellt wird;
- in Reaktion auf eine Benutzereingabe zwischen dem Beleuchtungsmodus (310) und einem Interaktionsmodus (320) geschaltet wird;
- in dem Interaktionsmodus (320) die Mehrzahl von steuerbaren Lichtquellen (400) so gesteuert wird, dass Vorschauen des Lichts mit variablen Eigenschaften vorgesehen werden;
- eine Vorschau der Vorschauen ausgewählt wird; und
- die Mehrzahl von steuerbaren Lichtquellen (400) so gesteuert wird, dass das Licht mit Eigenschaften der besagten einen Vorschau bereitgestellt wird,
**dadurch gekennzeichnet, dass**
die Steuerung der Mehrzahl der steuerbaren Lichtquellen (400) in dem Interaktionsmodus (320), um Vorschauen des Lichts mit variablen Eigenschaften bereitzustellen, die Steuerung eines Teils (410) der Mehrzahl der steuerbaren Lichtquellen (400) umfasst, um die Vorschauen des Lichts mit variablen Eigenschaften vorzusehen, während ein Rest der Mehrzahl von steuerbaren Lichtquellen (400) in dem Beleuchtungsmodus verbleibt.

## Revendications

1. Système (500), comprenant :
- une pluralité de sources de lumière pouvant être commandées (400) configurées pour fournir de la lumière dans un mode d'éclairage (310) pour éclairer des zones ; et
- un processeur (520) configuré pour commuter entre un mode d'interaction (320) et le mode d'éclairage (310) en réponse à une entrée utilisateur à partir d'un utilisateur ;
dans lequel, dans ledit mode d'interaction (320), ledit processeur (520) est adapté pour commander ladite pluralité de sources de lumière pouvant être commandées (400) pour fournir des prévisualisations de ladite lumière avec au moins un attribut varié pour la sélection d'une prévisualisation, parmi lesdites prévisualisations, par ledit utilisateur ; et
dans lequel, dans ledit mode d'éclairage (310), ledit processeur (520) est configuré pour commander ladite au moins une source de lumière pouvant être commandée (400) pour fournir ladite lumière possédant des attributs de ladite une prévisualisation,
**caractérisé en ce que**
dans ledit mode d'interaction (320), ledit processeur (520) est configuré pour fournir, auxdites prévisualisations, une portion (410) de ladite pluralité de sources de lumière pouvant être commandées (400) alors qu'un reste de la pluralité de sources de lumière pouvant être commandées (400) reste dans le mode d'éclairage.

2. Système (500) selon la revendication 1, dans lequel ladite entrée utilisateur inclut un geste, ledit système comprenant en outre un système de vision (530) configuré pour reconnaître ledit geste pour au moins l'une parmi la commutation entre ledit mode d'interaction (320) et ledit mode d'éclairage (310), et la sélection de ladite une prévisualisation (420).

3. Système (500) selon la revendication 1, comprenant en outre au moins l'un parmi un dispositif de pointage et un bouton pour fournir ladite entrée utilisateur.

4. Système (500) selon la revendication 1, dans lequel ladite entrée utilisateur est fournie en pointant un dispositif de pointage (530) vers ledit au moins un parmi ladite au moins une source de lumière pouvant être commandée (510) ou un écran affichage (540) d'au moins une section de lumière associée à ladite au moins une source de lumière pouvant être commandée (510).

5. Système (500) selon la revendication 4, dans lequel ledit écran affichage (540) est inclus dans un parmi un dispositif multimédia, un ordinateur, un moniteur, une télévision, un assistant numérique personnel, un téléphone, et une unité de commande à distance.

6. Système (500) selon la revendication 1, dans lequel lesdits attributs variés sont variés au fil du temps.

7. Système (500) selon la revendication 1, dans lequel ladite au moins une source de lumière pouvant être commandée (510) fournit temporairement, auxdites prévisualisations, ledit au moins un attribut varié dans ledit mode d'interaction (320).

8. Système (500) selon la revendication 1, dans lequel une pluralité de sources de lumière (400) fournit spatialement, auxdites prévisualisations, ledit au moins un attribut varié dans ledit mode d'interaction (320).

9. Système (500) selon la revendication 1, dans lequel une pluralité de sources de lumière (400) fournit spatialement, auxdites prévisualisations, au moins deux attributs variés.

10. Système (500) selon la revendication 1, dans lequel ledit au moins un attribut varié inclut au moins l'une parmi une intensité, une saturation, une couleur et une tonalité chromatique.

11. Procédé pour sélectionner des attributs d'une lumière à partir d'une pluralité de sources de lumière pouvant être commandées (400), le procédé comprenant les actions de :
- la fourniture de lumière à partir de la pluralité de sources de lumière pouvant être commandées (400) dans un mode d'éclairage (310) pour éclairer des zones ;
- la commutation entre le mode d'éclairage (310) et un mode d'interaction (320) en réponse à une entrée utilisateur ;
- la commande, dans ledit mode d'interaction (320), de ladite pluralité desdites sources de lumière pouvant être commandées (400) pour fournir, à des prévisualisations de ladite lumière, des attributs variables ;
- la sélection d'une prévisualisation desdites prévisualisations ; et
- la commande de ladite pluralité de sources de lumière pouvant être commandées (400) pour fournir ladite lumière possédant des attributs de ladite une prévisualisation,
**caractérisé en ce que**
la commande, dans ledit mode d'interaction (320), de ladite pluralité desdites sources de lumière pouvant être commandées (400) pour fournir, à des prévisualisations de ladite lumière, des attributs variables comprend la commande d'une portion (410) de ladite pluralité desdites sources de lumière pouvant être commandées (400) pour fournir, auxdites prévisualisations de ladite lumière, des attributs variables alors qu'un reste de ladite pluralité de sources de lumière pouvant être commandées (400) reste dans le mode d'éclairage.
